# EUROPEAN PATENT APPLICATION

(11) **EP 2 562 667 A1**
(43) Date of publication of application: **27.02.2013**
(21) Application number: 12172954.5
(22) Date of filing: 21.06.2012
(51) Int. Cl.: G06F 21/00

(54) **Apparatus and method for providing security information on background process**

(30) Priority: 24.08.2011 KR 20110084789
(71) Applicant: Pantech Co., Ltd., Seoul 121-792 (KR)
(72) Inventor: Kim, Mi-Sook, 121-792 Seoul (KR); Park, Hye-Suk, 121-792 Seoul (KR); Shin, Hyun-O, 121-792 Seoul (KR); Lee, Chul-Gee, 121-792 Seoul (KR)
(74) Representative: Jordan, Volker Otto Wilhelm

(57) **Abstract**

An apparatus and method for providing security information on a background process are provided. The method includes executing an application, detecting an event associated with the execution of the application, identifying a security related permission associated with the application, determining whether the security related permission matches a registered security related permission, determining an application identifier in response to the security related permission matching the registered security related permission, determining whether the event is associated with the background process, and displaying a security risk alert icon based on the detected event. The apparatus includes an application execution unit to execute an application; a security risk detection unit to detect an event associated with a background process of the application; and a screen configuration unit to configure a security risk alert icon to be displayed based on the detected event.

## Description

### CROSS-REFERENCE TO RELATED APPLICATION(S)

This application claims the benefit under 35 U.S.C. § 119(a) of Korean Patent Application No. 10-2011-0084789, filed on August 24, 2011, in the Korean Intellectual Property Office, the entire disclosure of which is incorporated herein by reference for all purposes. This application is related to U.S. Patent Application No. 13/351,119, filed on January 16, 2012, having attorney docket number P4611US00 which claims priority from and the benefit of Korean Patent Application No. 10-2011-0084790, filed on August 24, 2011, and U.S. Patent Application No. 13/351,136, filed on January 16, 2012, having attorney docket number P4613US00 which claims priority from and the benefit of Korean Patent Application No. 10-2011-0084791, filed on August 24, 2011, all of which are assigned to the same assignee as the current application, and all of which are incorporated by reference in its entirety as if fully set forth herein.

### BACKGROUND

FIELD

The following description relates to an apparatus and method for providing security information of a background process.

DISCUSSION OF THE BACKGROUND

If a malicious code is executed as a background process in an apparatus or a system storing sensitive information, sensitive information including personal information may be exposed. Also, the apparatus or the system may be susceptible to malicious viruses, which may harm the apparatus or the system without being noticed by a user. For example, if an infected program is executed in a mobile phone, various operations, such as sending a message, accessing a network, intercepting personal information or the like may be performed as a background process without notice. However, a malicious background process, which may cause damage to the apparatus or the system, may continue to operate until it is detected and terminated.

### SUMMARY

Exemplary embodiments of the present invention provide an apparatus and a method for providing security information on a background process.

Additional features of the invention will be set forth in the description which follows, and in part will be apparent from the description, or may be learned by practice of the invention.

Exemplary embodiments of the present invention provide a method for providing security information of a background process including executing an application, detecting an event associated with the execution of the application, identifying a security related permission associated with the application, determining whether the security related permission matches a registered security related permission, determining an application identifier in response to the security related permission matching the registered security related permission, determining whether the event is associated with the background process, and displaying a security risk alert icon based on the detected event.

Exemplary embodiments of the present invention provide an apparatus to provide security information including an application execution unit to execute an application; a security risk detection unit to detect an event associated with the execution of the application, to detect a security related permission associated with the application, to determine whether the security related permission matches a registered security related permission, to determine an application identifier if the security related permission matches the registered security related permission, and to determine whether the event is associated with a background process; and a screen configuration unit to configure a security risk alert icon to be displayed based on the detected event.

Exemplary embodiments of the present invention provide a method for providing security information of a background process including executing an application, detecting an event associated with the execution of the application, identifying a security related permission associated with the application, determining whether the security related permission matches a registered security related permission, determining an application identifier in response to the security related permission matching the registered security related permission, determining whether the event is associated with the background process based on the application identifier, displaying a security risk alert icon as a sub-icon near an application icon corresponding to the application, and displaying a notification message for notifying a security risk associated with the application, in which the notification message comprises at least one of a number of security related permissions and an option to either terminate an operation of the application or delete the application.

It is to be understood that both the foregoing general description and the following detailed description are exemplary and explanatory and are intended to provide further explanation of the invention as claimed. Other features and aspects may be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a diagram illustrating an apparatus to provide security information on a background process according to an exemplary embodiment of the invention.

FIG. 2 is a diagram illustrating an application management unit according to an exemplary embodiment of the invention.

FIG. 3 is a diagram illustrating a security-related permission processing unit according to an exemplary embodiment of the invention.

FIG. 4 is a diagram illustrating a screen configuration unit according to an exemplary embodiment of the invention.

FIG. 5 is a diagram illustrating a display screen to display security information on a background process according to an exemplary embodiment of the invention.

FIG. 6 is a diagram illustrating a display screen to provide security information on a background process according to an exemplary embodiment of the invention.

FIG. 7A and FIG. 7B are diagrams illustrating an arrangement of security risk display icons around an application icon according to an exemplary embodiment of the invention.

FIG. 8 is a diagram illustrating a display screen to display security information on a background process according to an exemplary embodiment of the invention.

FIG. 9 is a diagram illustrating a display screen to display security information on a background process according to an exemplary embodiment of the invention.

FIG. 10 is a diagram illustrating a display screen to display security information on a background process according to an exemplary embodiment of the invention.

FIG. 11A, FIG. 11B, and FIG. 11C are diagrams illustrating a display screen to display detailed security information on background processes according to an exemplary embodiment of the invention.

FIG. 12 is a flowchart illustrating a method of providing security information on a background process according to an exemplary embodiment of the invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity.

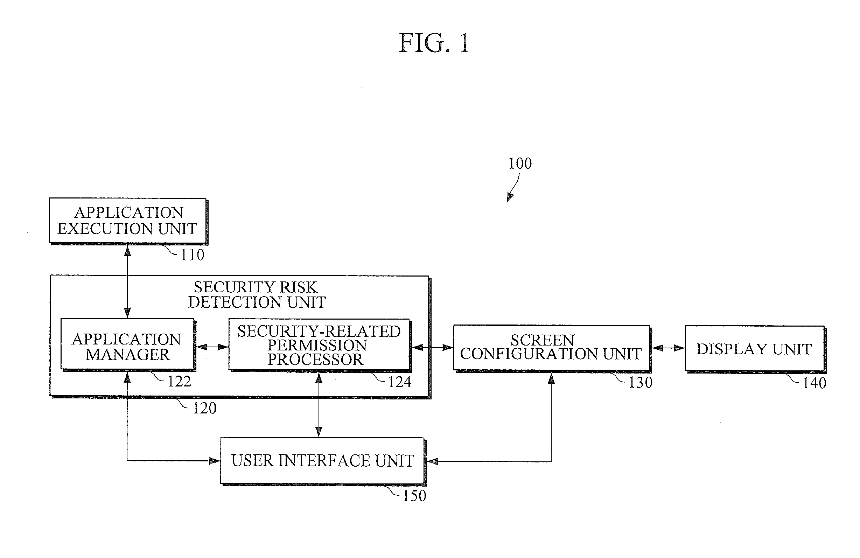

FIG. 1 is a diagram illustrating an apparatus to provide security information on a background process according to an exemplary embodiment of the invention.

Referring to FIG. 1, apparatus 100 may be configured to provide a user with security information on a background process, which may be a process that runs in a background. The background process may generally refer to a process that may operate in the apparatus without notification provided to a user interface or other output device units (e.g., display unit, sound unit, vibrating unit and the like).

In a case in which two or more programs or applications run in a terminal, a program or application that runs on a display screen may be referred to as running in the foreground, and another program or application that runs, but is not displayed on the display screen, may be referred to as running in a background mode. That is, a background process may be a process that is not displayed in the foreground of a display screen. Further, the background process may include a process associated with a foreground process and not displayed on the display screen.

In response to the receipt of an input signal that requests detailed security information, the apparatus 100 may provide various security related information related to a program or application. Security related information my include, without limitation, transactional history of an application that performs an operation that may pose a security risk, an operating status of the application, information that may be accessed by the application (e.g., personal information, financial information, and other sensitive information), and the like. Information provided by the apparatus 100 may be used so that the user may become aware of security risks, protect sensitive information, and/or prevent an attack from a malicious program or application (e.g., computer virus, spyware, cookies, and the like). The apparatus 100 may be implemented as various types of terminal devices, such as a mobile terminal (e.g., a smart phone, a mobile phone, or a personal digital assistant (PDA)), a personal computer (PC), a laptop computer, an Internet Protocol television (IPTV), and the like.

Referring to FIG. 1, the apparatus 100 includes an application execution unit 110, a security risk detection unit 120, a screen configuration unit 130, a display unit 140, and a user interface unit 150.

The application execution unit 110 may execute an application driven by the apparatus 100. The application execution unit 110 may generate an event in connection with the execution of an application. An event may refer to an operation performed by the apparatus 100 in connection with the execution of the application, which may include information search, geographic position determination, and the like. To run an application in the apparatus 100, one or more permissions may be granted to the application by the security risk detection unit 120. Permission may refer to a right that may be granted to perform an event in connection with the execution of an application. For example, if an application is downloaded into the apparatus 100 for the first time, one or more permissions that the application has may be stored in a storage unit (not shown) in the apparatus 100. If an application is executed, an operation or an event may be performed according to the permission of the application, which may determine whether an event is allowed. Further, in order to perform an event, a reference permission may be set or a combination of permissions may be set.

The security risk detection unit 120 may monitor an application, and may register a security-related permission therein based on the monitoring results to provide security information related to the application to a user. Security-related permission may refer to a permission that may be granted to an application to access or use information stored in the apparatus 100. Stored information may include personal information, financial information, and/or other sensitive information.

The security risk detection unit 120 may determine whether an event that is performed in association with a background process of an application uses a registered security-related permission. The security risk detection unit 120 may detect an event that is performed in association with a background process, determine permission associated with the background process, determine a security-related permission used by the detected event, and/or identify an identifier of an application that uses the determined security-related permission. If the apparatus 100 uses an Android® based platform, the security risk detection unit 120 may be installed in the Android® framework.

Referring again to FIG. 1, the security risk detection unit 120 includes an application manager 122 and a security-related permission processor 124.

The application manager 122 may detect an event that is performed in connection with the execution of an application by the application execution unit 110. Further, the application manager 122 may detect an event regardless of whether the event is related to a background process or a foreground process of an application, and may determine whether the application has permission to execute the event. In response to an event being detected, the application manager 122 may allow the event to be executed if an application related to the event has a permission to execute the detected event. If the application does not have permission to execute the detected event, the event manager 120 may ignore the detected event. Further, the application manager 122 may determine whether one or more applications or a process of one or more applications is being driven as a background process or a foreground process.

The security-related permission processor 124 may transmit security related information to a display screen to alert a user of a security risk. The security-related permission processor 124 may register one or more security-related permissions. Information on one or more of the security-related permissions may be stored in a storage unit in the security-related permission processor 124 or in another device (e.g., a server) that may be readily accessible by the security-related permission processor 124. The security-related permissions may be registered in response to a user input signal being received via the user interface unit 150, or in response to an external input signal being received from an external device via a network. The security-related permissions may be registered in the apparatus 100 in advance before the apparatus 100 is placed on the market, before usage of the apparatus 100, or during operation of the apparatus 100. The security-related permissions may be updated in response to the receipt of a user input signal or an external input signal.

The security-related permission processor 124 may transmit a list of one or more security-related permissions that may be registered in the application manager 122. The application manager 122 may detect an event related to a background process, and may determine whether a permission used by the detected event matches with any one of the registered security-related permissions. If the permission used by the detected event matches one of the registered security-related permissions, the security-related permission processor 124 may detect an identifier of an application that uses the same or similar security-related permission as the detected event. An application identifier may refer to a unique expression to distinguish one application from another.

The application manager 122 may detect a security-related permission (or information related to a security-related permission) and/or an application identifier, and transmit the detected security-related permission and/or the detected application identifier to the security-related permission processor 124. The application manager 122 may also transmit information indicating whether an application process using the detected security-related permission is a foreground process or a background process, and process information on the execution of the application process (e.g., start time and end time of the application process).

The security-related permission processor 124 may determine whether an event is associated with a background process of an application based on an application identifier and process information provided by the application manager 122.

The security-related permission processor 124 may transmit information related to a security-related permission used by a background process-associated event and/or an identifier of an application that includes the background process-associated event to the screen configuration unit 130. The information related to a security-related permission (or a list of one or more security-related permissions) used by a background process-associated event may include information related to a background process-associated event and its associated application, and/or execution state information of the application.

If a user input signal is received, the security-related permission processor 124 may stop the operation or execution of an application that is exposed to a security risk and/or delete the application. Further, the security-related permission processor 124 may control the screen configuration unit 130 to provide detailed information on the application.

The screen configuration unit 130 may configure a security risk alert screen, which may be a display screen used to alert a user to a security risk, in response to a background process-associated event being detected. The screen configuration unit 130 may receive information related to a security-related permission used by a background process-associated event and/or an identifier of an application related to the background process-associated event from the security-related permission processor 124. In response, the screen configuration unit 130 may configure a security risk alert screen based on the received information and/or the received application identifier.

Further, the screen configuration unit 130 may dynamically configure a security risk alert screen related to an application using at least one security risk display icon that may be generated according to the categories of one or more registered security-related permissions.

The security-related permission categories may include, but are not limited to, at least one of a position information service category, a messaging service category, a payment service category, a call service category, a Bluetooth® (BT) service category, a WiFi/3G service category, a file system service category, and a personal information-access service category. The security-related permission categories may be set or reset in response to the receipt of a user input signal or in response to the receipt of a control signal from an external device, which may be transmitted by the external device via a network. An example of classifying various security-related permissions into one or more categories will hereinafter be described.

A position information service may acquire user position information (e.g., global positioning system (GPS) information) in a background mode. Table 1 shows an example of various security-related permissions that may be classified into the position information service category.

**Table 1**

| Permission | Accessible Data | Content of Permission |
|---|---|---|
| ACCESS_FINE_LOCATION | Latitude/longitude, speed, direction, and altitude information, and the like | Allows application to access fine (e.g., GPS) location |
| ACCESS_LOCATION_EXTRA_COMMANDS | Additional location information | Allows application to access extra location provider commands |

A messaging service may send a short message service (SMS) or multimedia messaging service (MMS) message in a background mode. Table 2 shows an example of various security-related permissions that may be classified into the messaging service category.

**Table 2**

| Permission | Accessible Data | Content of Permission |
|---|---|---|
| BROADCAST_SMS | SMS server addresses, text, and the like | Allows application to broadcast SMS receipt notification |
| READ_SMS | Source addresses, text, and the like | Allows application to read SMS messages |
| RECEIVE_MMS | Source addresses, text, multimedia data, and the like | Allows application to monitor incoming MMS messages, to record or perform processing on them |
| RECEIVE_SMS | Source addresses, text, and the like | Allows application to monitor incoming SMS messages, to record or process SMS messages |
| RECEIVE_WAP_PUSH | Uniform Resource Locator (URL) and the like | Allows application to monitor incoming Wireless Application Protocol (WAP) push messages |
| SEND_SMS | Destination addresses, text, and the like | Allows application to send SMS messages |
| WRITE_SMS | Destination addresses, text, and the like | Allows application to write SMS messages |

A payment service may make a payment in a background mode. Table 3 shows an example of various security-related permissions that may be classified into the payment service category.

**Table 3**

| Permission | Accessible Data | Content of Permission |
|---|---|---|
| Near Field Communication (NFC) | URL, smart posters, text, payment information, and payment history information | Allows applications to perform input/output (I/O) operations over NFC |

A call service may make and/or receive a call in a background state. Table 4 shows an example of various security-related permissions that may be classified into the call service category.

**Table 4**

| Permission | Accessible Data | Content of Permission |
|---|---|---|
| CALL_PHONE | Source and destination addresses, call duration information, and call history information | Allows application to initiate phone call without going through dialer user interface to receive user confirmation on the call being placed |
| CALL_PRIVILEGED | Phone numbers | Allows application to call a phone number, including emergency numbers, without going through dialer user interface to receive user confirmation on the call being placed |
| PROCESS_OUTGOING_CALLS | Phone numbers | Allows an application to monitor, modify, or abort outgoing calls |

A BT service may transmit and/or receive data via Bluetooth® in a background mode. Table 5 shows an example of various security-related permissions that may be classified into the BT service category.

**Table 5**

| Permission | Accessible Data | Content of Permission |
|---|---|---|
| BLUETOOTH® | BT connection/accepting/transferring data, and sender/receiver information | Allows applications to connect to paired Bluetooth® devices |
| BLUETOOTH_ADMIN | BT setting option values | Allows applications to discover and pair Bluetooth® devices (Used to set options in a BT setting window) |

A WiFi/3G service may transmit and/or receive data via a WiFi/3G network in a background mode. Table 6 shows an example of various security-related permissions that may be classified into the WiFi/3G service category.

**Table 6**

| Permission | Accessible Data | Content of Permission |
|---|---|---|
| ACCESS_NETWORK_STATE | Network connection state | Allows applications to access information about networks |
| ACCESS_WIFI_STATE | Service Set Identifier (SSID), Media Access Control (MAC) Addresses, and the like | Allows applications to access information about Wi-Fi networks |
| BROADCAST_WAP_PUSH | URLs and the like (MMS phone numbers, text, and the like) | Allows application to broadcast WAP push receipt notification |
| INTERNET | Network connection state, connection type, IP, port, URL, And uploaded/downloaded data amount information | Allows applications to open network sockets |
| WRITE_APN_SETTINGS | Access Point Name (APN) | Allows applications to write APN settings |
| ACCESS_COARSE_LOCATION | Cell-ID and WI-FI information | Allows application to access coarse (e.g., Cell-ID, WiFi) location |

A file system service may delete and/or modify user data in a background mode. Table 7 shows an example of various security-related permissions that may be classified into the file system service category.

**Table 7**

| Permission | Accessible Data | Content of Permission |
|---|---|---|
| ACCESS_CHECKIN_PROPERTIES | Properties table information | Allows read/write access to "properties" table in check-in database, to change values that get uploaded |
| AUTHENTICATE_ACCOUNTS | Account information, account password, and account user data | Allows application to act as an Account Authenticator for an Account Manager |

A personal information access service may access a user's personal information (e.g., contacts information, email account information, and the like). Table 8 shows an example of various security-related permissions that may be classified into the personal information access service category.

**Table 8**

| Permission | Accessible Data | Content of Permission |
|---|---|---|
| GET_ACCOUNTS | Account name, account type, and the like | Allows access to list of accounts in Accounts Service |
| READ_CALENDAR | Alarm information, schedule information (start/end time, alarm scheduled time, and the like) | Allows application to read user's calendar data |
| READ_CONTACTS | Contacts names, phone numbers, email addresses, and the like | Allows application to read user's contacts data |
| READ_HISTORY_BOOKMARKS | Browsing history and Bookmarks | Allows an application to read (but not write) user's browsing history and bookmarks |
| READ_LOGS | system log file | Allows application to read low-level system log files |
| USE_SIP | Data used in Session Initiation Protocol (SIP) | Allows application to use SIP service |
| WRITE_CALENDAR | Alarm information, schedule information (start/end time, alarm scheduled time, and the like) | Allows application to write (but not read) user's calendar data |
| WRITE_CONTACTS | Contacts names, phone numbers, email addresses, and the like | Allows application to write (but not read) user's contacts data |
| WRITE_HISTORY_BOOKMARKS | Browsing history and bookmarks | Allows application to write (but not read) user's browsing history and bookmarks |
| WRITE_SECURE_SETTINGS | Secure settings values such as screen lock or Universal Serial Bus (USB) debugging | Allows application to read or write secure system settings |
| WRITE_SETTINGS | Setting values in Settings menu such as Display, Sounds, Network, and the like | Allows application to read or write system settings |

The screen configuration unit 130 may configure a display screen so that at least one security risk display icon may be displayed in an application information display area, a notification information display, or both. The application information display area may refer to an area, in which one or more application icons corresponding to application information may be displayed. The notification information display area may be an area, in which current system state information (e.g., date, time, a radio reception state, or the like) may be displayed.

The screen configuration unit 130 may display at least one security risk display icon near an application icon, which may represent an application that generates a background process-associated event. The security risk display icons may be displayed as a sub-icon of the application icon by using a previously-registered security-related permission. The sub-icon may correspond to detailed information related to the application icon, and may be displayed in a smaller size than the application icon.

If a security-related permission that may be classified into a new category is detected, the screen configuration unit 130 may display a new security risk display icon representing the new category near the application icon. Further, the new security display icon may be displayed in a clockwise or counterclockwise direction. If a security-related permission of a category corresponding to a security risk display icon is no longer being used, the screen configuration unit 130 may delete the security risk display icon. The security related permission of a category may be no longer used due to a termination of the application, termination of a process associated with the security-related permission, or termination of an event associated with the process. A security risk display icon corresponding to the identified security risk may disappear in response to detailed information related to a corresponding security risk being identified by a user (i.e., the user clicks on the sub-icon to view the detailed information related to the corresponding security risk).

The screen configuration unit 130 may notify a user of a risk associated with a background process by using a notification window (e.g., a pop-up window, a pop-under window, and the like). The screen configuration unit 130 may display the number of security-related permissions that are detected. Further, the screen configuration unit 130 may display the number of detected security-related permissions as one or more sub-icons near an application icon along with or apart from a security-related alert icon.

As described above, a user may be notified of a security risk by displaying security risk alert information on a display screen. The security risk detection unit 120 may also notify a user of a security risk by using a hardware device. For example, the security risk detection unit 120 may output via a speaker (not shown) an alarm sound notification to indicate that the apparatus 100 is exposed to a security risk.

The user interface unit 150 may receive a user input signal, and may transmit the user input signal to the security risk detection unit 120 and the screen configuration unit 130. The user interface unit 150 may be implemented as various types of devices, such as a touch pad, a keypad, a touch screen or the like. Further, if a user input signal to select security risk alert information is received, the user interface unit 150 may provide detailed information on a security-related permission corresponding to the security risk alert information. The detailed information on the security-related permission may include information on an application that performs an event using the security-related permission and information on the execution state of a background process of the application.

If a security risk is detected, a user may shut down one or more operations corresponding to a security risk category of an application associated with the security risk. Further, the user may terminate or delete the application. The user may issue a request to receive detailed information on the application to the apparatus 100. If a security-related permission is used in association with a background process of an application to perform a call or messaging service, information on an incoming call or message (e.g., an incoming phone number), the time of transmission of a call or message, and/or receipt of a call or a message may be displayed.

The screen configuration unit 130 may provide or display at least one of the following icons: an icon to terminate an operation that restricts the execution of an event using security risk permission; an icon to terminate an application related to the event; an icon to delete the application; and an icon to provide detailed information related to the application.

In the example illustrated in FIG. 1, security information related to a background process may be provided to a user so that the user may identify the background process and its associated security risks. Accordingly, it may be possible to control one or more background processes to enhance security.

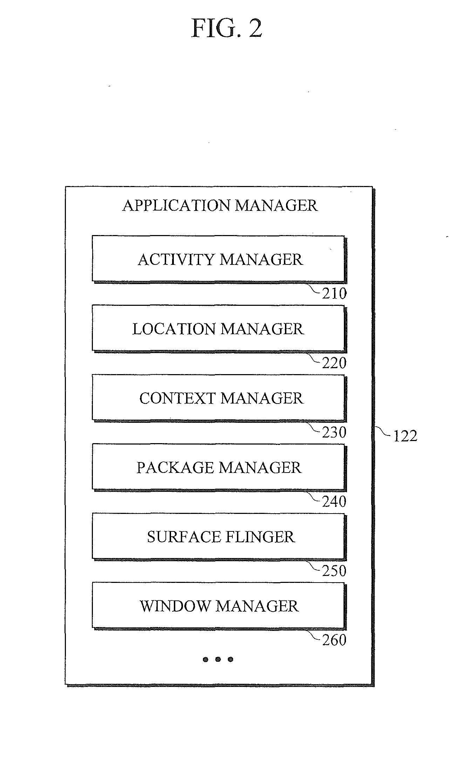

FIG. 2 is a diagram illustrating an application management unit according to an exemplary embodiment of the invention.

Referring to FIG. 2, the application manager 122 may include, but is not limited to, an activity manager 210, a location manager 220, a context manager 230, a package manager 240, a surface flinger 250, and a window manager 260.

The activity manager 210 may manage the lifecycle and/or stack of some or all activities (or events) of one or more applications that may be performed in the apparatus 100. The activity manager 210 may receive process execution state information, which may be information related to the execution state of a process of an application, and event information, which may be information related to an event that occurs in association with the process, from the application execution unit 110. Further, the process execution state information may include information indicating whether the process is being executed, whether the process is a foreground process or a background process, a start time and/or the previous start time of the execution of the process, name of a service associated with the process, name of a package program connected to the service, and the like.

The location manager 220 may perform an operation (e.g., determining the GPS location of the apparatus 100) and determine whether a detected event has a location service-related permission.

The context manager 230 may be a system processor that manages various system services, and may manage a handle, which may be location information regarding the system services that are installed in a system.

The package manager 240 may load information on application files (for example, Android® application package files (APKs)), and may provide information on packages that are installed and loaded in a system.

The surface flinger 250 may combine display screens that are being used by various applications, and may transmit the result of the combination to a display buffer (not shown).

The window manager 260 may be located below, above, or at the same level as the service flinger 250, and may transmit content to be drawn on a device screen to the surface flinger 250.

The operation modules that are included in the application manager 122 may operate in connection with one another to determine whether one or more application processes performed by the application execution unit 110 is a background process or a foreground process, to detect an event associated with one or more application process, to detect a security-related permission used by the detected event, and to identify an application identifier corresponding to the detected security-related permission.

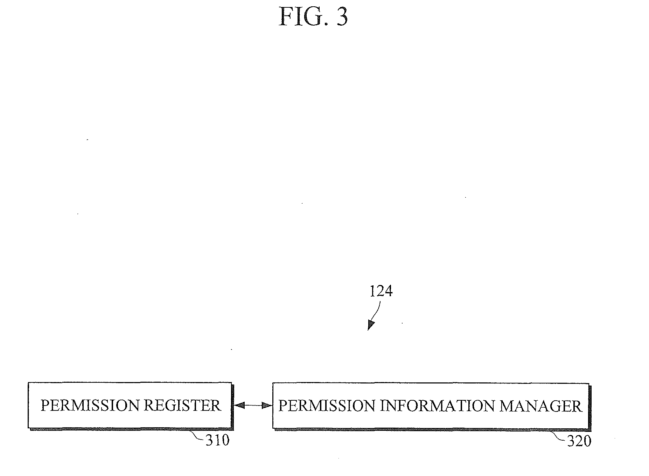

FIG. 3 is a diagram illustrating a security-related permission processing unit according to an exemplary embodiment of the invention.

Referring to FIG. 3, the security-related permission processor 124 includes a permission register 310 and a permission information manager 320. The permission register 310 may register one or more security-related permissions. The security-related permission may be registered, modified, and/or deleted in response to a user input signal being received via the user interface unit 150 or a signal being received from an external device via a network. The security-related permission may be registered in the apparatus 100 in advance before the apparatus 100 is placed on the market. Further, the security-related permission may be registered in the apparatus before the apparatus 100 is used or during its use.

The permission register 310 may transmit the registered security-related permission to the application manager 122. The permission information manager 320 may determine whether an event is associated with a background process based on a security-related permission and an application identifier that may be detected by the application manager 122.

The permission information manager 320 may be configured to communicate with the application manager 122 and the screen configuration unit 130. The permission information manager 320 may receive information indicating whether an event is associated with a background process or a foreground process from the activity manager 210 of the application manager 122. The permission information manager 320 may use the received information to provide the screen configuration unit 130 with information to configure a display screen to alert a user to a security risk. The permission information manager 320 may transmit information related to a security-related permission registered in association with a background process of an application, an identifier of the application, information related to the execution state of the application, and other relevant information to the screen configuration unit 130. The screen configuration unit 130 may configure a display screen to provide information related to a security-related permission, which may be associated with a background process, to a user. Information related to the security related permission may be based on the information provided by the permission information manager 320.

The permission information manager 320 may manage one or more security-related permissions that may be set not to be displayed, from among other security-related permissions registered in the permission register 310. A plurality of security-related permissions registered in association with a background process may include one or more security-related permissions that may be set not to be displayed. The permission information manager 320 may transmit information on the plurality of security-related permissions except for the security-related permissions set not to be displayed to the screen configuration unit 130.

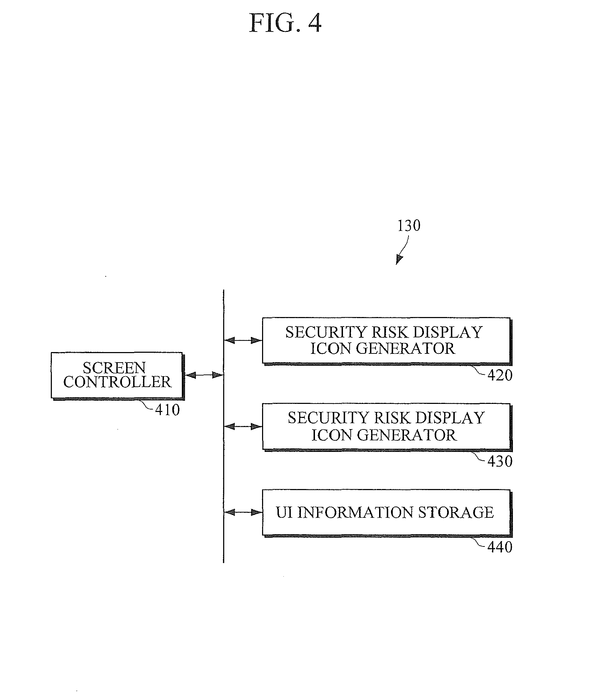

FIG. 4 is a diagram illustrating a screen configuration unit according to an exemplary embodiment of the invention.

Referring to FIG. 4, the screen configuration unit 130 includes a screen controller 410, a security risk display icon generator 420, a detailed information manager 430, and a user interface (UI) information storage 440.

The screen controller 410 may configure a display screen to be provided to the display unit 140 of the apparatus 100. The screen controller 410 may receive one or more security-related permissions from the security-related permission processor 124 of the security risk detection unit 120. Further, the screen controller 410 may configure a display screen to alert a user to a security risk based on the received security-related permission.

The security risk display icon generator 420 may generate a security risk display icon corresponding to one or more security-related permission categories. The security risk display icon may be generated in response to the receipt of a user input signal from the user interface unit 150. The security risk display icon may be stored in the UI information storage 440.

The detailed information manager 430 may manage detailed information on one or more security-related permissions. The detailed information on a security-related permission may include, but is not limited to, information on an application that uses the security-related permission, data that is exposed to a security risk, time of exposure of the data to the security risk, a data transmission Internet Protocol (IP), and the like. The type of the detailed information managed by the detailed information manager 430 may vary from one security-related permission category to another security-related permission category and from one application to another application. If a user input signal to request detailed information on a security-related permission is received (e.g., a selection of a security risk display icon), the screen controller 410 may search the detailed information manager 430 to determine detailed information on the security-related permission. Further, the screen controller 410 may configure a display screen based on the identified detailed information.

The UI information storage 440 may store information related to configuration of a display screen, which may be used by the controller 410. The UI information storage 440 may store at least one security risk display icon.

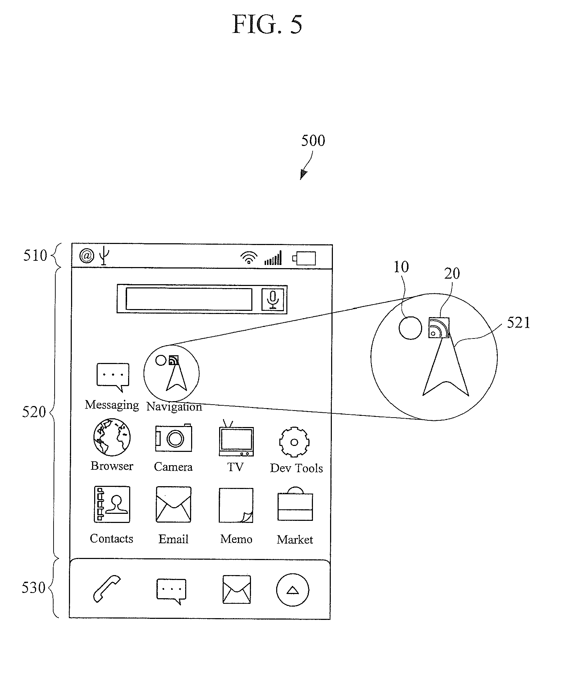

FIG. 5 is a diagram illustrating a display screen to display security information on a background process according to an exemplary embodiment of the invention.

Referring to FIG. 5, the apparatus 100 may provide a display screen 500. The display screen 500 may include a notification information display area 510, a first application information area 520, and a second information display area 530. The notification information display area 510 may provide a user with various notification information related to the apparatus 100 (e.g., wireless network signal strength, battery life, and the like). The first application information display area 520 may provide first application information, such as one or more application icons corresponding to one or more applications that may be installed in the apparatus 100. The second application information display area 530 may provide second application information, such as information on one or more applications that may be frequently used.

A security risk may be displayed near an application icon as a sub-icon of the application icon corresponding to an application, which may expose the apparatus 100 to the security risk. Referring back to FIG. 5, security risk display icon 10 and security risk display icon 20 may be displayed as sub-icons of the navigation application icon 521. The security risk display icon 10 and security risk display icon 20 may indicate that the navigation application icon 521 has performed two events as background processes. More specifically, the background processes may be based on security-related permission categories corresponding to the security risk display icon 10 and security risk display icon 20.

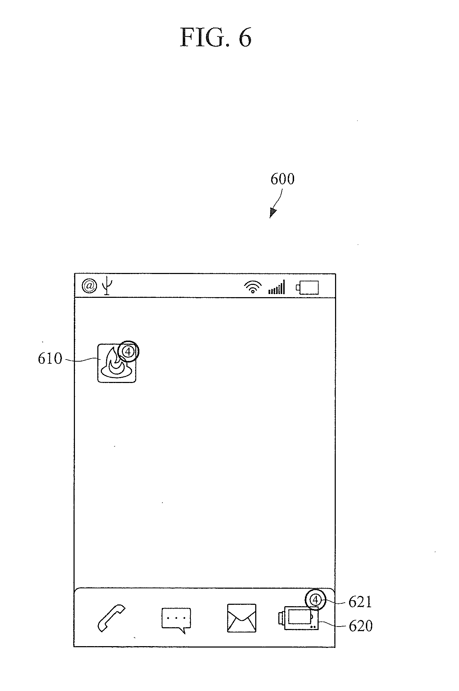

FIG. 6 is a diagram illustrating a display screen to provide security information on a background process according to an exemplary embodiment of the invention.

Referring to FIG. 6, the number of security-related permissions used by a background process of an application corresponding to an application icon 610 may be displayed on a display screen 600 near the application icon 610 as a sub-icon of the application icon 610. As shown in FIG. 6, the number '4' may be displayed near the application icon 610. The number '4' may indicate that four security-related permissions are being used by the background process of the application corresponding to the application icon 610. Further, the number of security-related permission categories including the security-related permissions used by the background process of the application corresponding to the application icon 610 may be displayed near the application icon 610. A user may set whether to display the number of security-related permissions or the number of security-related permission categories as a sub-icon of the application icon 610.

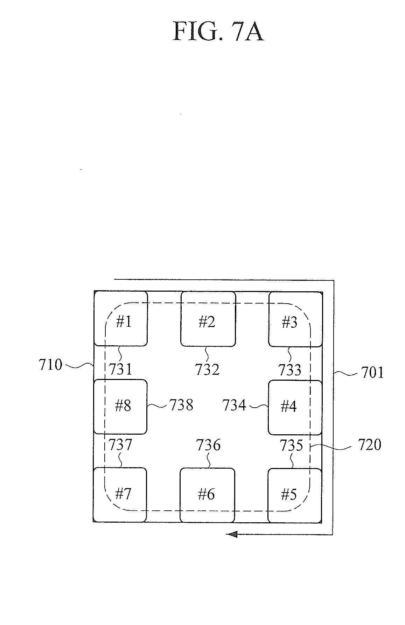

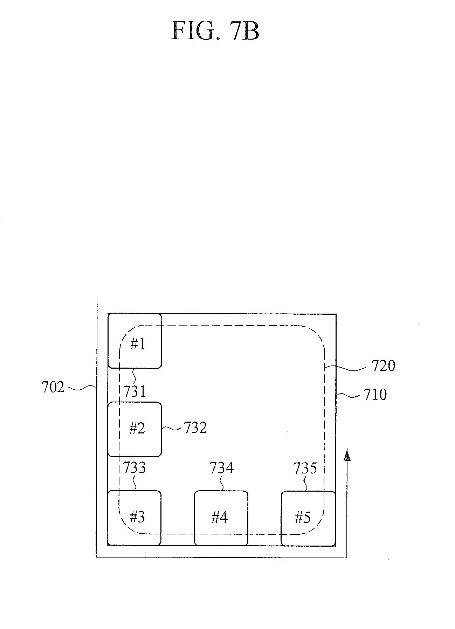

FIG. 7A and FIG. 7B are diagrams illustrating an arrangement of security risk display icons around an application icon according to an exemplary embodiment of the invention.

Referring to FIG. 7A, an area 710 includes an area to display an application icon. Further, area 731, area 732, area 733, area 734, area 735, area 736, area 737, and area 738 to display security risk display icons as sub-icons of the application icon. FIG. 7A further illustrates eight security risk display icons near an application icon, however, the number of security risk icons are not limited thereto. One or more security risk icons may be dynamically arranged over the course of the execution of a background process of an application.

More specifically, if the number of security-related permission categories that may be exposed to a security risk by a background process of an application increases, a new security risk icon may be added and may be arranged in a clockwise direction around an application icon, as indicated by arrow 701. Although not illustrated, the new security risk icon may be added and arranged in a counterclockwise direction, in a reference pattern, according to type of security risk, and the like.

If a security-related permission is no longer used due to the termination of an application process or an event that is executed based on the security-related permission, a security risk display icon corresponding to a security-related permission category including the security-related permission may disappear. Further, a security risk display icon may disappear if detailed information on a security risk represented by the security risk display icon is checked by a user (i.e., user clicks on the security risk display icon to read the security risk notification). If security risk display icon #6 disappears based on conditions described above, security risk display icon #7 may be displayed in the area 736 where security risk display icon #6 was previously displayed, and security risk display icon #8 may be displayed in the area 737 where security risk display icon #7 was previously displayed.

Referring to FIG. 7B, if the number of security-related permission categories that may be exposed to a security risk by a background process of an application increases, a new security risk icon may be added and arranged in a counterclockwise direction around an application icon, as indicated by an arrow 702. As described above with reference to FIG. 7A, if a security-related permission is no longer used due to the termination of an application process or an event that is executed based on the security-related permission, a security risk display icon corresponding to a security-related permission category including the security-related permission may disappear.

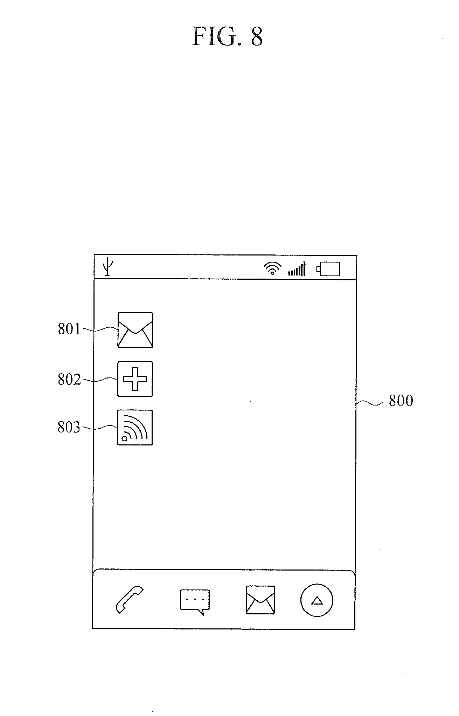

FIG. 8 is a diagram illustrating a display screen to display security information on a background process according to an exemplary embodiment of the invention.

Referring to FIG. 8, security risk display icon 801, security risk display icon 802, and security risk display icon 803 may be displayed on a display screen 800. The security risk display icons may indicate that their respective security-related permissions have been used. Further, the security risk display icons may indicate usage of respective security related permission without regard to the application(s) associated with the usage. The security risk display icon 801 may indicate that a security-related permission belonging to the messaging service category has been used. The security risk display icon 802 may indicate that a security-related permission belonging to the position information service category has been used. The security risk display icon 803 may indicate that a security-related permission belonging to the WiFi/3G service category has been used. Further, the security risk display icon 801, security risk display icon 802, and security risk display icon 803 may be displayed as solid or transparent icons. In addition, the security risk display icon 801, security risk display icon 802, and security risk display icon 803 may be displayed as animated UI icons.

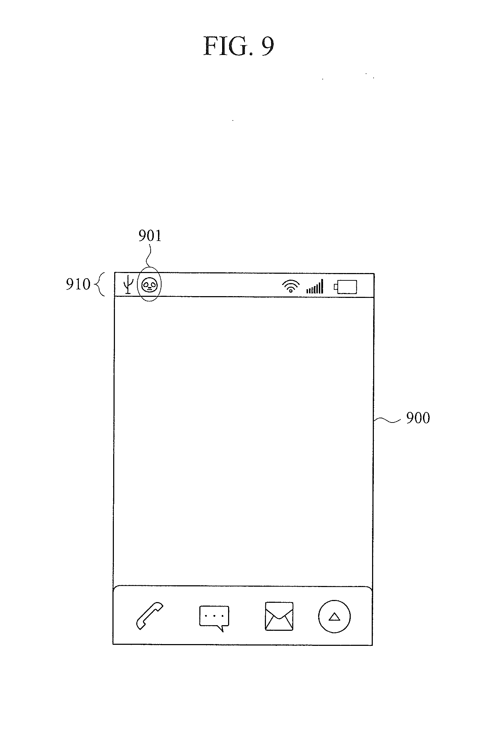

FIG. 9 is a diagram illustrating a display screen to display security information on a background process according to an exemplary embodiment of the invention.

Referring to FIG. 9, a security risk display icon 901 may be displayed in a notification information display area 910 on a display screen 900 to indicate that a security-related permission has been used by a background process. The security risk display icon 901 may further indicate that the apparatus 100 is exposed to a security risk. The security risk display icon 901 may be an icon associated with a particular security-related permission, or may be a general icon used to alert a user to a security risk.

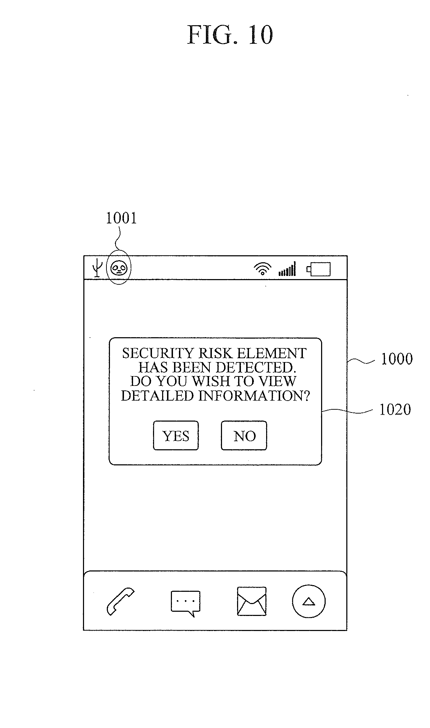

FIG. 10 is a diagram illustrating a display screen to display security information on a background process according to an exemplary embodiment of the invention.

Referring to FIG. 10, a notification window 1020 may be provided on a display screen 1000 to indicate that a security-related permission has been used by a background process. The notification window 1020 may further indicate that the apparatus 100 is exposed to a security risk. If a user input signal corresponding to a selection or clicking of a 'YES' button on the notification window 1020 is received, detailed information related to a security risk that the apparatus 100 is exposed to may be provided. A security risk display icon 1001 may also be provided on the display screen 1000. Further, the security risk display icon 1001 may be displayed in a notification information display area on the display screen 1000.

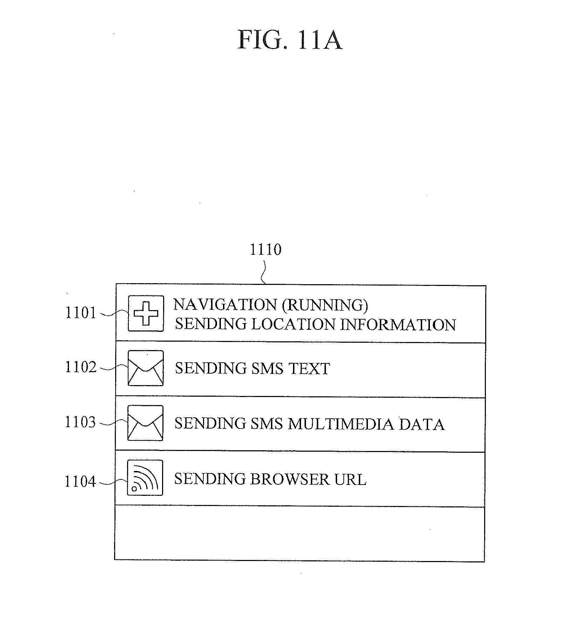

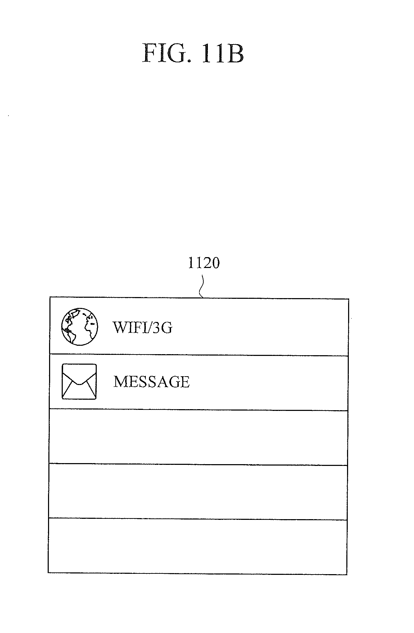

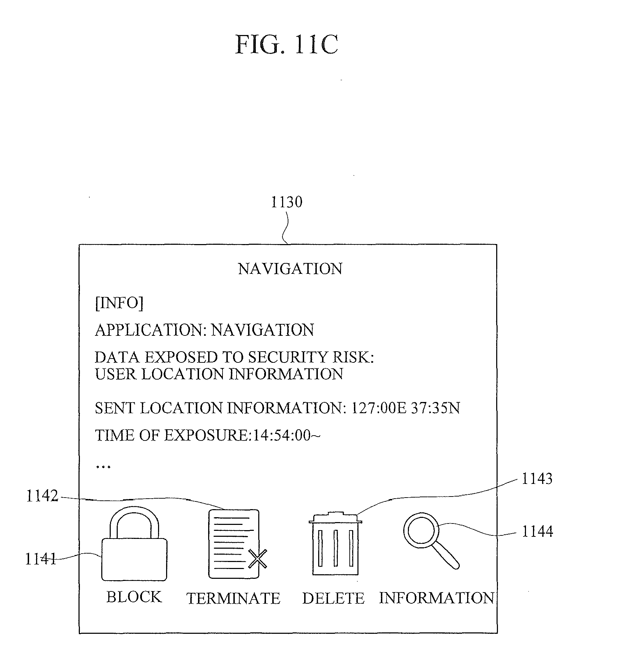

FIG. 11A, FIG. 11B, and FIG. 11C are diagrams illustrating a display screen to display detailed security information on background processes according to an exemplary embodiment of the invention.

FIG. 11A illustrates a display screen 1110 to provide detailed information on security-related permissions that may be exposed to a security risk posed to the apparatus 100. Referring to FIG. 11A, the display screen 1110 may be provided in response to the security risk icon 901 of FIG. 9 or the security risk icon 1001 of FIG. 10 being selected, or in response to a 'YES' button being selected from the notification window 1020 of FIG. 10. Detailed security-related permission information corresponding to security risk display icon 1101, security risk display icon 1102, and security risk display icon 1103 as application information. Information related to the operating state of an application that uses a security-related permission may be provided as detailed security-related permission information.

Referring to FIG. 11B, in response to the receipt of a user input signal, which may request detailed information on a background process of a navigation application corresponding to the navigation application icon 521 of FIG. 5, security-related permission category information regarding one or more security-related permissions used by the navigation application (e.g., WiFi/3G service category and the messaging service category) may be provided on a display screen 1120. In addition to the security-related permission category information, information related to the applications used by the navigation application may be provided on the display screen 1120. The security-related permission category information may be provided as a security risk display icon.

Referring to FIG. 11A and FIG. 11C, in response to the receipt of a user input signal corresponding to a selection of the security risk display icon 1101, a display screen 1130 may be provided to display detailed security-related permission information related to the navigation application.

Referring to FIG. 11C, detailed information related to the navigation application may be displayed on the display screen 1130. Detailed information related to the navigation application may include a name of the application, data exposed to a security risk, data transmitted to the outside of the apparatus 100, time of the exposure of data, and the like. Further, in the case of a call application or a message application, a number associated with an outgoing call or message, time of transmission or receipt of a call or a message, or the like may be provided on the display screen 1130.

User action input icon 1141, user action input icon 1142, user action input icon 1143, and user action input icon 1144 that may be selected by a user may be provided on the display screen 1130. In response to the user action input icon 1141 or BLOCK icon being selected, an event using a security-related permission may be terminated so that an operation of the navigation application may be limited. Further, if the BLOCK icon 1141 is selected, a security risk-related operation of the navigation application may be terminated, but the navigation application may continue to operate. In response to the user action icon 1142 or TERMINATE icon being selected, the navigation application may be terminated. In response to the user action icon 1143 or DELETE icon being selected, the navigation application may be deleted. In response to the user action icon 1144 or INFORMATION icon being selected, detailed information related to the navigation application may be provided.

In an example, the user action input icon 1141, the user action input icon 1142, the user action input icon 1143, and the user action input icon 1144 may be provided on the display screen 1130. In another example, the user action input icon 1141, the user action input icon 1142, the user action input icon 1143, and the user action input icon 1144 may be provided on another display screen. In response to a security risk display icon being selected by a user input signal, a display screen including the user action input icon 1141, the user action input icon 1142, the user action input icon 1143, and the user action input icon 1144 may be provided.

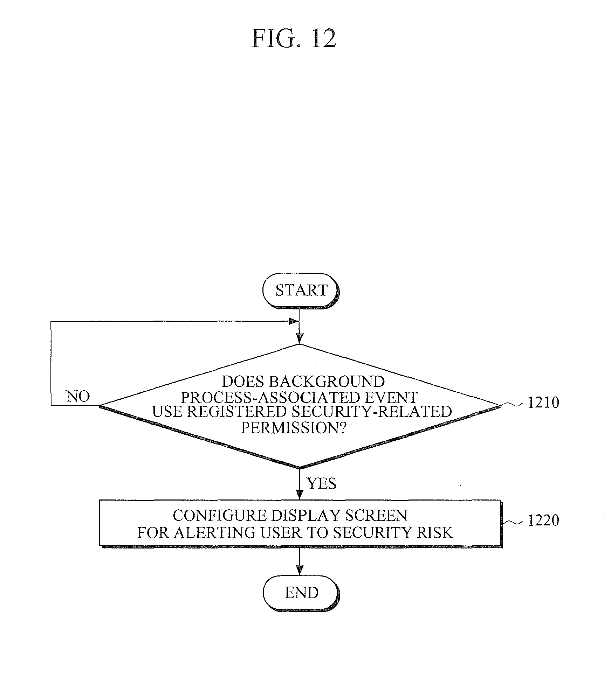

FIG. 12 is a flowchart illustrating a method of providing security information on a background process according to an exemplary embodiment of the invention.

Referring to FIG. 12, in operation 1210, an apparatus to provide security information on a background process may determine whether an event that occurs in association with a background process of an application uses a registered security-related permission. The apparatus may detect at least one of an event caused by a background process, a security-related permission used by the detected event, and an identifier of an application using the detected security-related permission. Further, the apparatus may determine whether the detected event is associated with a background process of the application.

In operation 1220, in response to the detected event being determined in operation 1210 to use a registered security-related permission, the apparatus may configure a display screen to alert a user to the existence of a security risk element. In response to the detected event being determined in operation 1210 to use a registered security-related permission, the apparatus may configure a display screen to alert a user to a security risk by using information on the detected security-related permission and the detected application identifier.

The apparatus may dynamically configure a display screen to alert a user to a security risk posed by a background process of an application by using at least one security risk display icon that may correspond to a registered security-related permission category. The apparatus may provide at least one of the following icons: an icon to terminate an event that uses a security-related permission; an icon to terminate an application that causes the event; an icon to delete the application; and an icon to provide detailed information on the application.

The processes, operations, methods, and/or software described herein may be recorded, stored, or fixed in one or more computer-readable storage media that includes program instructions to be implemented by a computer to cause a processor to execute or perform the program instructions. The media may also include, alone or in combination with the program instructions, data files, data structures, and the like. The media and program instructions may be those specially designed and constructed, or they may be of the kind well-known and available to those having skill in the computer software arts. Examples of computer-readable storage media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules that are recorded, stored, or fixed in one or more computer-readable storage media, in order to perform the operations and methods described above, or vice versa. In addition, a computer-readable storage medium may be distributed among computer systems connected through a network and computer-readable codes or program instructions may be stored and executed in a decentralized manner.

As described above, it may be possible to allow a user to easily control a background process of an application by providing security information on the background process. Therefore, it may possible to improve security.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
An apparatus and method for providing security information on a background process are provided. The method includes executing an application, detecting an event associated with the execution of the application, identifying a security related permission associated with the application, determining whether the security related permission matches a registered security related permission, determining an application identifier in response to the security related permission matching the registered security related permission, determining whether the event is associated with the background process, and displaying a security risk alert icon based on the detected event. The apparatus includes an application execution unit to execute an application; a security risk detection unit to detect an event associated with a background process of the application; and a screen configuration unit to configure a security risk alert icon to be displayed based on the detected event.

## Claims

1. A method for providing security information of a background process, comprising:
executing an application;
detecting an event associated with the execution of the application;
identifying a security related permission associated with the application;
determining whether the security related permission matches a registered security related permission;
determining an application identifier in response to the security related permission matching the registered security related permission;
determining whether the event is associated with the background process; and
displaying a security risk alert icon based on the detected event,
wherein the security related permission preferably comprises at least one of a position information service category, a messaging service category, a payment service category, a call service category, a short range communication service category, a network service category, a file system service category, and a personal information access service category.

2. The method of claim 1, wherein the security related permission is registered in response to receiving an input.

3. The method of claim 1, further comprising:
monitoring the application; and
registering a security related permission based on a result of the monitoring.

4. The method of one of claims 1 to 3, wherein the determination of whether the event is associated with the background process is based on the application identifier.

5. The method of one of claims 1 to 4,
wherein the security risk alert icon is displayed in response to the determination that the event is associated with the background process;
or/and
wherein the security risk alert icon is displayed near an application icon corresponding to the application;
or/and
wherein the security risk alert icon is displayed as a sub-icon near an application icon corresponding to the application and arranged in a clockwise or counterclockwise direction.

6. The method of one of claims 1 to 5, further comprising:
displaying a notification message that notifies that a security risk is associated with the application, wherein the notification message comprises a number of security related permissions,
wherein the notification message preferably further comprises at least one of an icon for terminating an operation restricting the execution of an event using security risk permission, an icon for terminating an application related to the event, an icon for deleting the application, and
an icon for providing detailed information related to the application.

7. The method of one of claims 1 to 6, further comprising:
terminating an operation of the application or deleting the application, in response to the determination that the application is exposed to a security risk.

8. An apparatus to provide security information, comprising:
an application execution unit adapted to execute an application;
a security risk detection unit adapted to detect an event associated with the execution of the application, to detect a security related permission associated with the application, to determine whether the security related permission matches a registered security related permission, to determine an application identifier in response to a determination that the security related permission matches the registered security related permission, and to determine whether the event is associated with a background process; and
a screen configuration unit adapted to configure a security risk alert icon to be displayed based on the detected event.

9. The apparatus of claim 8, adapted to register the security related permission in response to receiving an input, wherein preferably the security risk detection unit is adapted to register the security related permission in response to receiving the input.

10. The apparatus of claim 8 or 9, wherein the security risk detection unit is adapted to monitor the execution of the application, and to register a security related permission based on a result of the monitoring.

11. The apparatus of one of claims 8 to 10, wherein the security risk detection unit is adapted to determine the event to be associated with the background process based on the application identifier.

12. The apparatus of one of claims 8 to 11, wherein the screen configuration unit is adapted to configure the security risk alert icon to be displayed in response to the determination that the event is associated with the background process.

13. The apparatus of one of claims 8 to 12, further comprising a display unit, wherein the screen configuration unit is adapted to configure the display unit to display a notification message to notify a security risk associated with the application, wherein the notification message comprises a number of security related permissions;
wherein the notification message preferably further comprises at least one of an icon to terminate an operation restricting the execution of an event using security risk permission, an icon to terminate an application related to the event, an icon to delete the application, and an icon to provide detailed information related to the application.

14. The apparatus of one of claims 8 to 13, wherein the apparatus is adapted to terminate an operation of the application or to delete the application, in response to the determination that the application is exposed to a security risk.

15. A method for providing security information of a background process, preferably according to one of claims 1 to 7, comprising:
executing an application;
detecting an event associated with the execution of the application;
identifying a security related permission associated with the application;
determining whether the security related permission matches a registered security related permission;
determining an application identifier in response to the security related permission matching the registered security related permission;
determining whether the event is associated with the background process based on the application identifier;
displaying a security risk alert icon as a sub-icon near an application icon corresponding to the application; and
displaying a notification message for notifying a security risk associated with the application, wherein the notification message comprises at least one of a number of security related permissions and an option to either terminate an operation of the application or delete the application.
